# EUROPEAN PATENT SPECIFICATION

(11) **EP 0 240 002 B1**
(45) Date of publication and mention of the grant of the patent: **11.08.1993**
(21) Application number: 87104791.6
(22) Date of filing: 01.04.1987
(51) Int. Cl.: H04N 1/18

(54) **A laser recording apparatus**
Laseraufzeichnungsvorrichtung
Dispositif d'enregistrement à laser

(30) Priority: 02.04.1986 JP 76157/86; 18.12.1986 JP 303539/86
(43) Date of publication of application: 07.10.1987
(73) Proprietor: Dainippon Screen Mfg. Co., Ltd., Kamikyo-ku Kyoto 602 (JP)
(72) Inventor: Shimazu, Shigeaki, 16 Kitaoji-cho Kamigamo Kita-ku Kyoto (JP); Endo, Kenji, Nagaokakyo-shi Kyoto (JP); Tamaki, Eiichi, 16 Kitaoji-cho, Kamigamo, Kita-ku Kyoto (JP); Wada, Yasuyuki, Takatsuki-shi Osaka (JP); Okazaki, Masahide, 465-1 Tsukiyama-cho Kuze Minami-ku Kyoto (JP); Kageyama, Takeshi, 465-1 Tsukiyama-cho Kuze Minami-ku Kyoto (JP); Kurata, Yoshio, 465-1 Tsukiyama-cho Kuze Minami-ku Kyoto (JP)
(74) Representative: Goddar, Heinz J., Dr.

(56) References cited:
- DE-A- 2 922 452
- GB-A- 2 156 624

## Description

The present invention relates to a laser exposure system with the features of the first part of claim 1.

The laser exposure apparatus as known from GB-A-2 156 624 is advantageous in that the laser exposure is effected by adjusting the pitches of beams forming images in optical dots on the screen. A constant beam pitch regardless of any varying deviations occurring in between the image-forming plane in the optical system and the recording plane is not ensured.

It is the object of the invention to provide a laser exposure system which ensures a constant beam pitch regardless of any varying deviations occurring in between the image-forming plane in the optical system and the recording plane.

This object of the invention is solved by the features of claim 1. Preferred embodiments of the invention are subject matter of the subclaims.

The invention is described by means of an embodiment shown in the drawings, wherein:
- Figure 1(A): is a diagrammatic perspective view showing a laser exposure system embodying the present invention;
- Figure 1(B): is a perspective view showing a modified version of the system of Figure 1(A);
- Figure 2: is a diagrammatic plan view showing the image-forming optical system shown in Figure 1(A);
- Figure 3: is a diagrammatic plan view showing a modified version of the image-forming optical system shown in Figure 1(A);
- Figure 4(A): is a perspective view on a enlarged scale showing part of the system shown in Figure 1(A);
- Figure 4(B): is a perspective view showing a modified version of the device shown in Figure 4(A);
- Figure 5: is a perspective view showing another example of the embodiment according to the present invention;
- Figure 6: is a diagrammatic plan view showing the mode of laser beams in the neighbourhood of the image-forming screen in the optical system;
- Figure 7: is a diagrammatic perspective view showing the arrangement of reflecting mirrors;
- Figure 8: is a graphic view exemplifying the angles taken by the laser beams shown in Figure 7, and
- Figures 9 and 10: are diagrammatic views showing the image appearing on the photosensitive sheet.

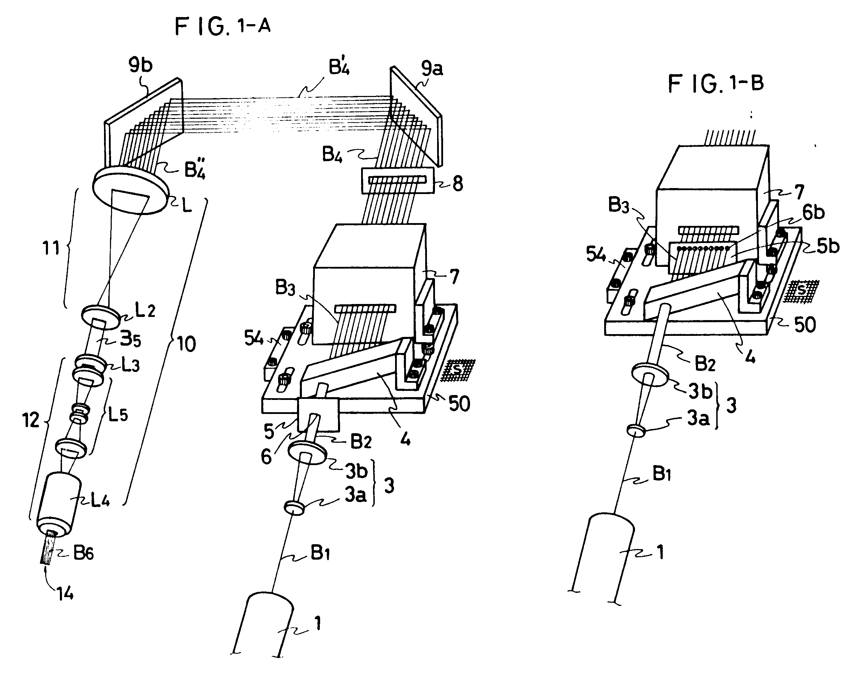

Referring to Figure 1(A) there are provided a source of laser 1, a beam expander 3, a beam splitter 4, a beam-shaping plate 5a, an aperture 6, a multi-channel optical modulator 7, a plate having a slit 8 for diffraction, reflecting mirrors 9a and 9b, and an image-forming optical system 10.

The beam expander 3 includes a pair of lenses 3a, 3b, which are to expand the diameter of the laser beams B₁ emitted from the source 1.

The beam-shaping plate 5a is to take out a central portion of the laser beams B₂ expanded by the expander 3 so as to obtain a relatively constant distribution of optical intensity. As the beam-shaping plate another type of beam-shaping plate 5b shown in Figure 1(B) can be used. This beam-shaping plate 5b is placed between the beam splitter 4 and the optical modulator 7 and which has several apertures 6b which are open in series in correspondence to the parallel beams B₃ divided by the beam splitter 4. This beam-shaping plates 5b also shapes the laser beams before they enter the modulator 7 so as to take out that part of laser beams which has a relatively constant optical intensity.

The beam splitter 4 splits the expanded laser beams B₂ into several parallel beams B₃. This splitter 4 can be provided with a glass plate having parallel surfaces, one of the surfaces having a perfect reflecting coating and the other having a coating which progressively changes the permeability so as to obtain an equal quantity of light throughout the parallel beams B₃. This type of beam splitter is disclosed in Japanese Patent Publication No. 52-122135.

The multi-channel optical modulator 7 can be an acousto-optical type, which comprises a plurality of supersonic wave vibrators attached to a single acousto-optical medium. The parallel laser beams B₃ are caused to impinge on the medium at places corresponding to the respective vibrators, thereby modulating the laser beams B₃ individually.

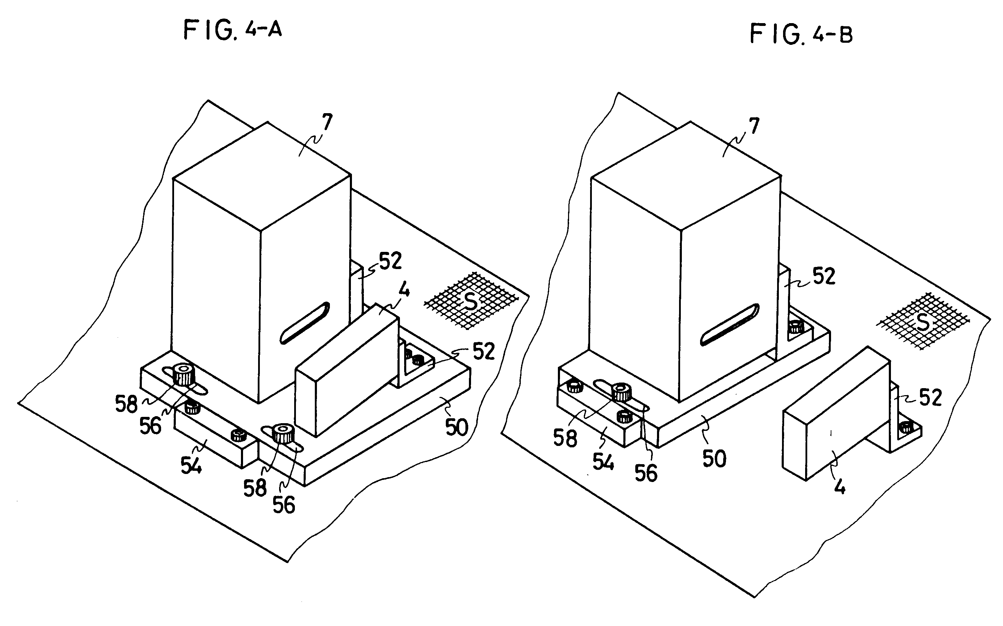

As shown in Figure 4(A) the beam splitter 4 and multi-channel optical modulator 7 are fixed to a base plate 50 placed on a reference plane (S) by means of a fastener 52. The base plate 50 is guided by an adjustable guide 54 in such a manner that it can move in parallel with the laser beams B₃ split by the splitter 4. The base plate 50 is provided with long holes 56 in which screws 58 are fitted. Normally the base plate 50 is fixed on the reference plane (S), and for adjustment they are loosened so as to enable the beam plate to move in parallel with the laser beams. Figure 4(B) shows another version, in which the beam splitter 4 is permanently fixed on the reference plane (S), and the multi-channel optical modulator 7 alone is moved for adjustment in parallel with the laser beams B₃.

The slit 8 allows the laser beams modulated by the modulator 7 to pass but prevents those not modulated by it from passing.

The laser beams B₄ passing through the slit 8 are changed in their directions by the first and second mirrors 9a and 9b, so as to be introduced in the image-forming optical system 10.

The image-forming optical system 10 is a telecentric optical entity which includes two telescopic optical units 11 and 12 telecentrically connected to each other. In this telecentric entity a plurality of parallel laser beams are reduced in their pitches so as to form an image 14 having a desired width on the screen (F).

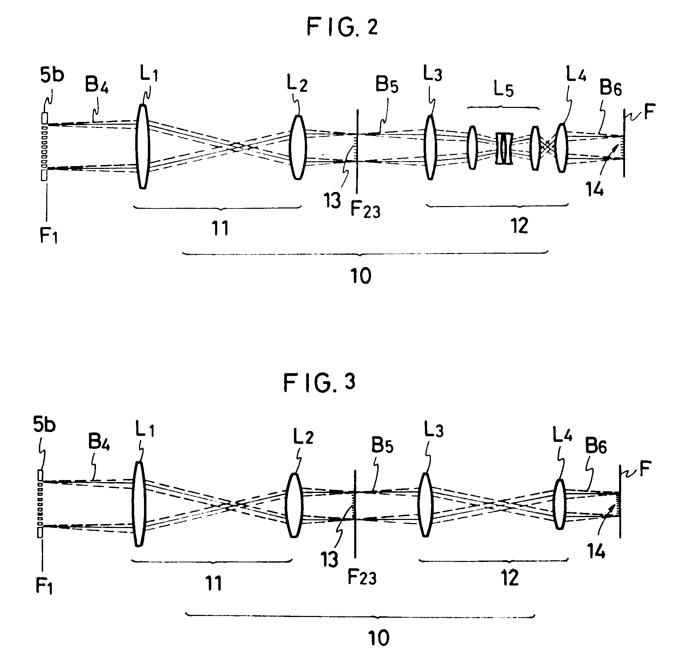

Figure 2 shows a diagrammatic view showing the optical system 10:
There are provided first and second lens L₁ and L₂ in the first telescopic optical unit 11. In Figure 1(B) the parallel laser beams B₄ from the beam shaping plate 5b situated at the forward focal position F₁ of the first lens L₁ are radiated from the second lens L₂ as the same number of traces B₅, which form an image 13 at the backward focal position F₂₃ of the second lens L₂, wherein the image 13 has beam pitches reduced at the ratio M₁.

The second telescopic optical unit 12 also has first and second lenses L₃ and L₄, which equally constitutes a telecentric optical entity. The parallel laser beams B₅ from the image 13 formed at the forward focal position (F) of the lens L₃ is radiated as the same number of trace B₆ from the second lens L₄ so as to form an image 14 whose beam pitches are also reduced as desired.

The second telescopic optical unit 12 includes a zoom lens L₅ whereby the beam pitches of the image 14 are steplessly adjusted.

Since the two telescopic optical units 11 and 12 are telecentrically connected, each reducing rate can be relatively small, thereby minimizing a possible abberation. If only one optical unit is used, the reducing rate will be unavoidably large, which is likely to cause a large abberation. In the illustrated embodiment the reducing rate is steplessly adjustable in the range of 1/150 to 1/300.

The use of the zoom lens L₅ is not limited to the second optical unit 12, and it can be used in the first optical unit 11. If there is no need to adjust the reducing rate steplessly it can be omitted as shown in Figure 3.

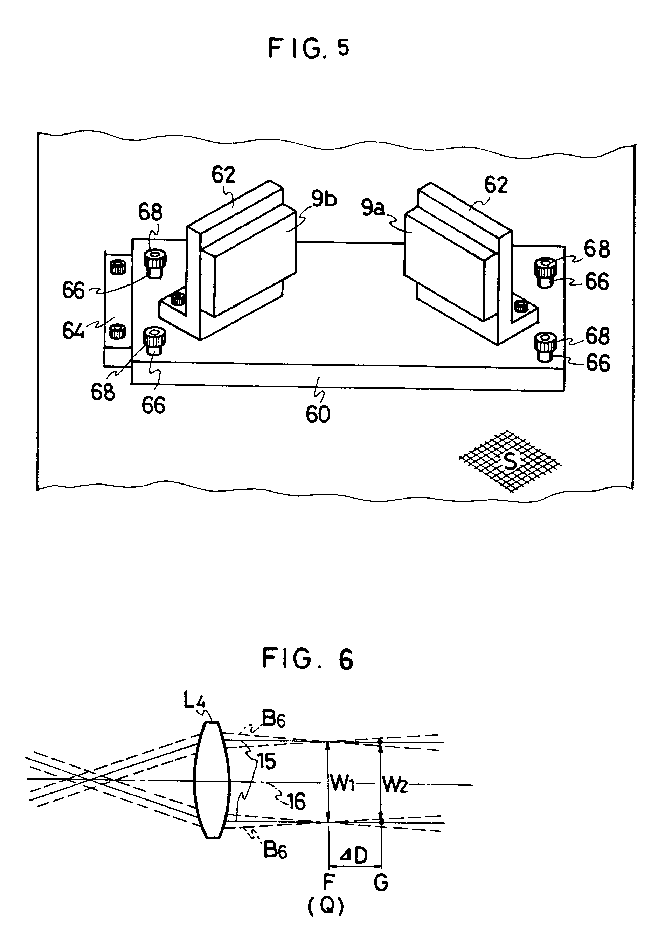

The advantage of the telecentric image-forming optical entity 10 is that in the case of a possible deviation ΔD occurring between the image-forming position (F) or (Q) and the recording position (G) as shown in Figure 6 the dimensions of the images W₁ and W₂ on the respective positions are practically equal. In other words, the main optical trace 15 in each laser beam B₆ from the second lens L₄ is in parallel with the optical axis 16 of the optical unit 12. The positional deviation is likely to make the image poor. To avoid this problem it is required to minimize the distance between the positions (F) and (G).

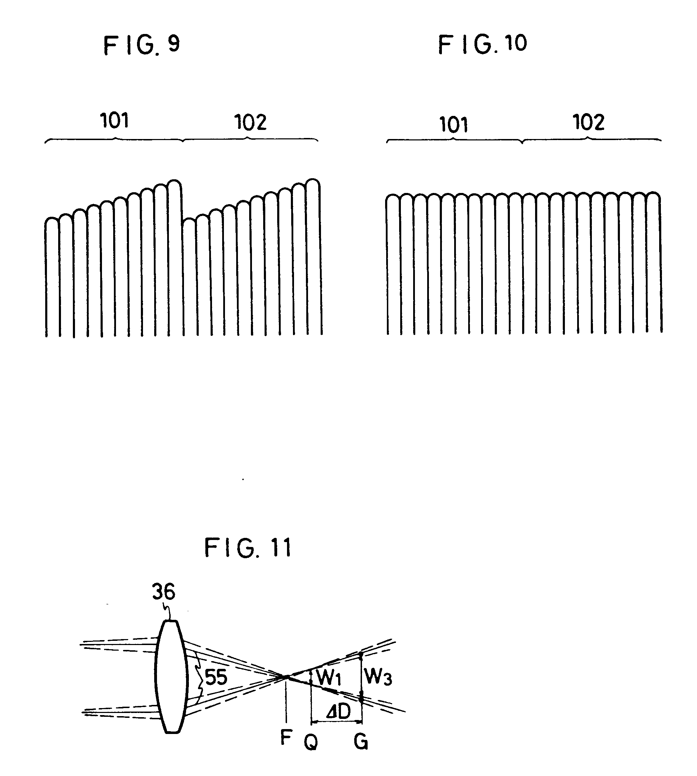

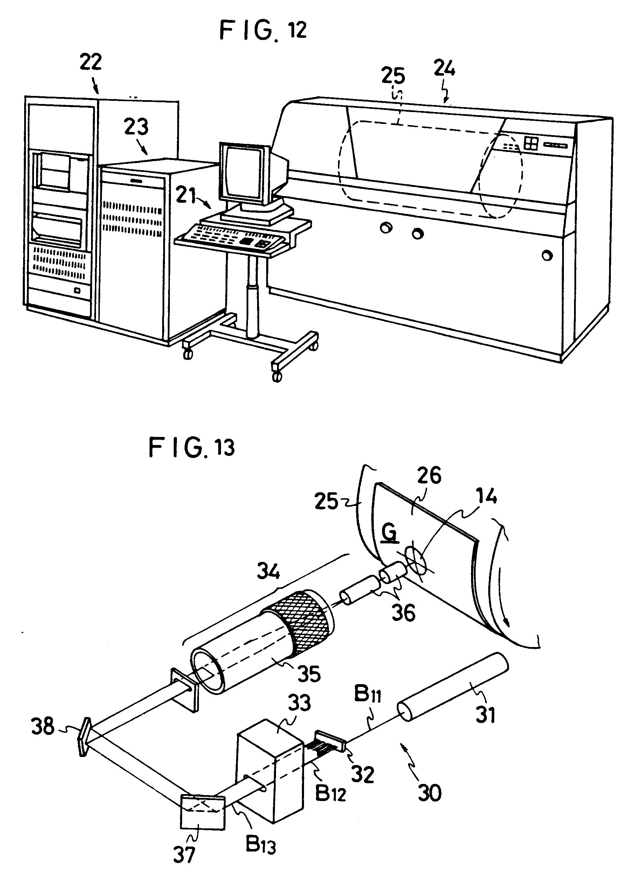

In such laser exposure devices a problem is that the multi-channel modulators of the same kind may have different Bragg angles, thereby causing the row of the laser beams to decline with respect to the reference plans (S) as shown in Figure 10. However the laser exposure apparatus of the present invention can compensate the decline of the laser beams to the reference plane (S) in the following manner;

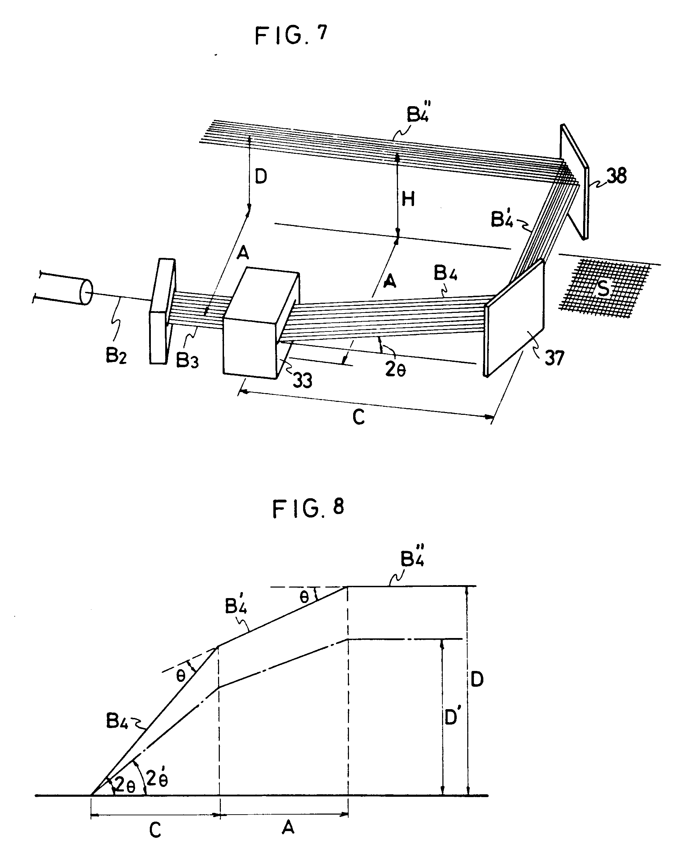

In Figure 7, suppose that the distance between a multi-channel modulator 33 and the first mirror 37 is (C), the distance between the laser beams B₃ flush with the reference plane (S) and the laser beams B₄ʺ is (A), and the height of the laser beams B₄ʺ flush with the recording plane above the reference plane is (D), the relationship between the distances (A), (C) and height (D) and the Bragg angles can be approximately expressed by the following equation: 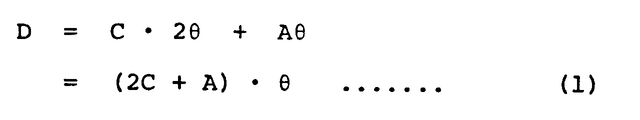
wherein the angle ϑ (radian) is extremely small.

Independently of any variation in the Bragg angles ϑ the distance (C) can be determined by the following equation with each modulator:

$\text{C = 1/2(D/ϑ - A) (2)}$

Therefore the decline is compensated without varying the distances (A) and height (D), that is, without changing the positions of the laser beams the decline of the laser beams can be compensated.

According to the present invention the distance between the modulator 7 and the first mirror 9a, which corresponds to the distance (C) in Figure 7, is adjusted in the following manner, wherein the "distance" means a distance from any selected trace of the laser beams or from an imaginary optical axis of the laser beams B₄:
First, the Bragg angle ϑ of the multi-channel optical modulator 7 is measured by means of a suitable measuring device. The measured value is introduced in the equation (2). Thus the values of the distance (C) is determined. Then each screw 58 is loosened so as to enable the base plate 50 to move until the distance between the modulator 7 and the first mirror 9a becomes equal to the calculated value. The base plate 50 is again fixed by fastening the screw 58.

The next step is that the angles of the first and second mirrors 9a, 9b are adjusted. It is adjusted to ensure that the declines of the laser beams from the modulator 7 and those reflecting on the second mirror 9b are complementary for the declines of the laser beams existing between the first and second mirrors 9a and 9b.

In this way the laser beams reflecting on the second mirror 9b are made in parallel with the reference plane (S) with respect to the sub-scanning direction. As a result the row of optical dots output by the image-forming optical system 10 is made in parallel with the reference plane (S).

Referring to Figure 5 a modified version of the present invention will be described:
In this embodiment the first and second mirrors 9a and 9b are moved for adjustment instead of moving the modulator 7, that is, the two mirrors are synchronously moved in parallel with the laser beams B₃, thereby changing the distance (C) between the first mirror 9a and the modulator 7. In this embodiment the mirror 9a, 9b are adjustably fixed to the base plate 60 on the reference plane (S) by means of fasteners 62. The base plate 60 is guided by a slidable guide 64 in such a manner as to be slidable on the reference plane (S) in parallel with the laser beams B₃ split by the beam splitter 4. The reference numeral 66 denotes long holes produced in the base plate 60, and the reference numeral 68 denotes screws whereby the base plate 60 is fixed on the reference plane (S).

In the embodiments described above the image-forming optical system 10 includes two telescopic optical units 11 and 12 connected but a single mirror or more than two mirrors can be effectively used provided that the system is a telecentric optical entity.

Instead of the slit 8 a plurality of apertures aligned in series can be used, or else a series of apertures can be provided in place between the image-forming optical system and the multi-channel optical modulator. In either case the apertures can make a slit-like long opening all together.

According to the present invention no change in size occurs in the recorded images even if any deviation occurs between the image-forming plane and the recording plane. This will be of particular advantage when the thickness of the photosensitive sheets varies, wherein it is only necessary to adjust the focus. There is no worry about a possible change in the size of the images to be recorded, thereby enabling the operator to concentrate himself on the operation of the apparatus.

Another advantage is that even if an error occurs in the Bragg angle of the modulator, and if a decline occurs in the rows of laser beams, the images can be scanned and recorded at accuracy because of the fact that the traces of laser beams are made in parallel with the reference plane (S) with respect to the subscanning direction of the image recording apparatus. In this way the images are scanned and recorded at high fidelity.

When the decline of the rows of laser beams are compensated, the positions of laser beams output by the laser exposure apparatus are kept constant, thereby fixing the recording basis.

In compensating a possible decline of the laser beams it is not necessary to move the image-forming optical system, thereby simplifying the operation. Otherwise the positional adjustment of the image-forming optical entity would be a lavour- and time-consuming work.

## Claims

1. A laser exposure apparatus for use in scanning and recording images, the apparatus comprising;
a source of laser (1) for emitting a laser beam;
a laser beam splitter (4) for subdividing the laser beam from the source into several parallel traces of laser beams;
a multi-channel optical modulator (7) for modulating the laser beams individually in response to the image signals;
a first and a second reflecting mirrors (9a, 9b) for directing the laser beams modulated by the modulator (7), and
an image-forming optical system (10) for throwing the laser beams from the second reflecting mirror (9b) on a recording plane,
characterized in that the image-forming optical system comprises first (11) and second (12) optically coaxial telescopes arranged so that the backward focal positions (F₂₃) of the output lens (L₂) of the first telescope (11) is substantially coincident with the forward focal position (F₂₃) of the input lens (L₃) of the second telescope (12).

2. An apparatus as defined in claim 1 or claim 2, characterized in that the image forming of the system (10) includes a zoom lens (L₅).

3. An apparatus as defined in claim 1 or 2, characterized in that the multi-channel optical modulator (7) is adjustable in the direction in which the laser beams received therein advance.

4. An apparatus as defined in one of the preceding claims, characterized in that the distance between the modulator (7) and the first mirror (9a) is variable, and that the first and second mirrors (9a, 9b) are adjustable with respect to their angles to a reference plane.

## Patentansprüche

1. Vorrichtung zum Bestrahlen mittels eines Lasers und zum Gebrauch beim Abtasten und Aufnehmen von Bildern, wobei die Vorrichtung folgendes umfaßt:
eine Laserlichtquelle (1) zum Aussenden eines Laserstrahls;
einen Laserstrahlaufteiler (4) zum Aufteilen des Laserstrahls von der Lichtquelle in mehrere parallele Laserstrahlspuren;
einen optischen Mehrkanalmodulator (7) zum individuellen Modulieren der Laserstrahlen in Antwort auf Bildsignale;
ein erster und ein zweiter Rückstrahlspiegel (9a, 9b) zum Lenken der durch den Modulator (7) modulierten Laserstrahlen; und
ein abbildendes optisches System (10) zum Projektieren der Laserstrahlen von dem zweiten Rückstrahlspiegel (9b) auf eine Aufnahmeebene,
dadurch gekennzeichnet, daß das abbildende optische System ein erstes Teleskop (11) und zweites Teleskop (12) umfaßt, die optisch koaxial so angeordnet sind, daß die Position des hinteren Brennpunkts (F₂₃) der Ausgangslinse (L₂) des ersten Teleskopes (11) im wesentlichen mit der Position des vorderen Brennpunkts (F₂₃) der Eingangslinse (L₃) des zweiten Teleskopes (12) zusammenfällt.

2. Vorrichtung nach Anspruch 1, dadurch gekennzeichnet, daß das abbildende System (10) eine Zoomlinse (L₅) enthält.

3. Vorrichtung nach Anspruch 1 oder 2, dadurch gekennzeichnet, daß der optische Mehrkanalmodulator (7) in der Richtung einstellbar ist, in welcher die darin empfangenen Laserstrahlen fortschreiten.

4. Vorrichtung nach einem der vorangegangenen Ansprüche, dadurch gekennzeichnet, daß der Abstand zwischen dem Modulator (7) und dem ersten Spiegel (9a) variable ist, und daß der erste und zweite Spiegel (9a, 9b) hinsichtlich ihrer Winkel zu einer Referenzebene einstellbar sind.

## Revendications

1. Appareil d'exposition à laser pour utilisation dans le balayage et l'enregistrement d'images, l'appareil comprenant :
- un diviseur de faisceau laser (4) pour subdiviser le faisceau laser de la source en plusieurs traces parallèles de faisceaux laser
- un modulateur optique multicanal (7) pour moduler les faisceaux laser individuellement en réponse aux signaux d'image
- un premier et un second miroirs réflecteurs (9a, 9b) pour diriger les faisceaux laser modulés par le modulateur (7) et
- un système optique de formation d'image (10) pour projeter les faisceaux laser du second miroir réflecteur (9b) sur un plan d'enregistrement,
caractérisé par le fait que le système optique de formation d'image comprend des premier (11) et second (12) télescopes optiquement coaxiaux agencés de manière que la position focale arrière (F₂₃) de la lentille de sortie (L₂) du premier télescope (11) coïncide sensiblement avec la position focale avant (F₂₃) de la lentille d'entrée (L₃) du second télescope (12).

2. Appareil tel que défini dans la revendication 1 où la revendication 2, caractérisé en ce que la formation d'image du système (10) comprend une lentille à foyer variable (zoom) (L₅).

3. Appareil tel que défini dans la revendication 1 ou 2, caractérisé en ce que le modulateur (7) optique multicanal est réglable dans la direction dans laquelle avancent les faisceaux laser reçus dans celui-ci.

4. Appareil tel que défini dans l'une des revendications précédentes, caractérisé en ce que la distance entre le modulateur (7) et le premier miroir (9a) est variable et que les premier et second miroirs (9a, 9b) sont réglables quant à leurs angles par rapport à un plan de référence.
